(19) Europäisches Patentamt
European Patent Office
Office européen des brevets

(11) **EP 4 679 332 A1**

(12) **EUROPEAN PATENT APPLICATION**

(43) Date of publication:
**14.01.2026   Bulletin 2026/03**

(21) Application number: **25187653.8**

(22) Date of filing: **04.07.2025**

(51) International Patent Classification (IPC):
**G06N 5/01** *(2023.01)*          **G06N 10/20** *(2022.01)*
**G06N 10/60** *(2022.01)*          **G06N 20/00** *(2019.01)*

(52) Cooperative Patent Classification (CPC):
**G06N 10/60; G06N 5/01; G06N 10/20; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.07.2024   JP 2024109997**

(71) Applicant: **FUJITSU LIMITED**
**Kawasaki-shi, Kanagawa 211-8588 (JP)**

(72) Inventor: **TAKAHASHI, Norihiko**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, INFORMATION PROCESSING METHOD, AND INFORMATION PROCESSING APPARATUS**

(57)    An information processing apparatus performs, a plurality of iterations, an update process of updating a value of a first parameter, which is a variable in a cost function, the value of the first parameter being applied to a variational quantum circuit for a variational quantum eigenvalue calculation. The information processing apparatus determines a value of a second parameter representing a weight for an amount of change to be applied to the value of the first parameter in each iteration of the update process, using the ratio between first and second values of the cost function, which are calculated by the variational quantum eigenvalue calculation using the values of the first parameter obtained in the k-th and (k-1)-th iterations of the update process, respectively. The information processing apparatus performs the (k+1)-th iteration of the update process using the amount of change weighted by the determined value of the second parameter.

FIG. 1

EP 4 679 332 A1

**Description**

FIELD

The present embodiments discussed herein relate to a computer program, an information processing method, and an information processing apparatus.

BACKGROUND

A variational quantum eigenvalue algorithm is known as a technique for performing quantum chemical calculations using a quantum computer or a simulator. A variational quantum eigensolver (VQE) using this algorithm is also known. The VQE algorithm is used, for example, to obtain the ground state energy of a substance.

In a quantum chemical calculation using the VQE algorithm, for example, a quantum computer measures the expectation value of a quantum state based on a variational quantum circuit parameterized by a plurality of parameters. The value of a cost function representing energy is obtained from the expectation value of the quantum state. The parameters include a rotation angle of a rotation gate, which is one of the quantum gates included in the variational quantum circuit. The value of the cost function represents the sum (total energy value) of energies calculated for each qubit. Hereinafter, unless otherwise specified, the term "energy value" refers to the total energy value.

A classical computer performs an update process of updating the values of the parameters based on the expectation value of the quantum state so that the energy becomes lower. The quantum computer generates the quantum state using the updated values of the parameters and measures the expectation value again. The quantum computer and the classical computer iteratively measure the expectation value of the quantum state and update the values of the parameters until the energy converges, thereby optimizing the parameters.

As a parameter optimization method, a gradient-based method is known, which optimizes parameters based on the gradient of a cost function obtained when the values of the parameters are changed. In addition, as a technique related to VQE, for example, a method has been proposed, which updates the values of parameters using an optimization method called a Broyden-Fletcher-Goldfarb-Shanno (BFGS) method that is a type of gradient-based method. In addition, in order to simulate a quantum system, a technique has been proposed, which obtains a wave function of the quantum system using quantum imaginary time evolution or another. See, for example, the following literatures.

Japanese Laid-open Patent Publication No. 2023-113956
Japanese National Publication of International Patent Application No. 2022-529187
U.S. Patent Application Publication No. 2023/0289639
U.S. Patent Application Publication No. 2023/0141618

In a conventional gradient-based method, a parameter (also referred to as a step size or a learning rate) with a fixed value may be used, the parameter representing a weight for an amount of change to be used in each execution of an update process of updating the values of parameters. If the parameter with the fixed value is not appropriate, there is a possibility that the number of iterations of processing until the energy converges increases and the calculation time of the variational quantum eigenvalue calculation becomes long.

SUMMARY

In one aspect, the present disclosure aims to reduce the calculation time of a variational quantum eigenvalue calculation.

In one aspect, there is provided a computer program that causes a computer to perform, a plurality of iterations, an update process of updating a value of a first parameter that is a variable included in a cost function, the value of the first parameter being applied to a variational quantum circuit used for a variational quantum eigenvalue calculation, the computer program causing the computer to perform a process including: determining a value of a second parameter representing a weight for an amount of change to be applied to the value of the first parameter in each iteration of the update process, by using a ratio between a first value of the cost function and a second value of the cost function, the first value being calculated by the variational quantum eigenvalue calculation using the value of the first parameter obtained in a k-th iteration of the update process, the second value being calculated by the variational quantum eigenvalue calculation using the value of the first parameter obtained in a (k-1)-th iteration of the update process, the k being a natural number; and performing a (k+1)-th iteration of the update process using the amount of change weighted by the determined value of the second parameter.

BRIEF DESCRIPTION OF DRAWINGS

FIG. 1 illustrates an example of an information processing method according to a first embodiment;
FIG. 2 illustrates an example of a system configuration according to a second embodiment;
FIG. 3 illustrates an example of hardware of a classical computer;
FIG. 4 is a block diagram illustrating an example of functions of the classical computer for VQE calculation;
FIG. 5 illustrates an example of a variational quantum circuit;
FIG. 6 is a flowchart illustrating an example procedure for a VQE calculation process;
FIGS. 7A and 7B illustrate examples of VQE calculations for obtaining the energy of a hydrogen molecule;
FIG. 8 illustrates an example of how a step size changes during a VQE calculation for obtaining the energy of the hydrogen molecule;
FIG. 9 illustrates an example of optimizing a parameter set $\theta$ during a VQE calculation for obtaining the energy of the hydrogen molecule;
FIG. 10 illustrates examples of VQE calculations for obtaining the energy of a benzene molecule;
FIG. 11 illustrates an example of how a step size changes during a VQE calculation for obtaining the energy of the benzene molecule; and
FIG. 12 illustrates an experimental result of the relationship between the value of a parameter m and the number of iterations until a convergence condition is satisfied.

DESCRIPTION OF EMBODIMENTS

Hereinafter, embodiments will be described with reference to the drawings. A plurality of embodiments may be combined unless they exclude each other.

[First Embodiment]

A first embodiment provides an information processing method that accelerates the convergence of energy in a variational quantum eigenvalue calculation, thereby reducing the number of iterations of processing and reducing the calculation time.

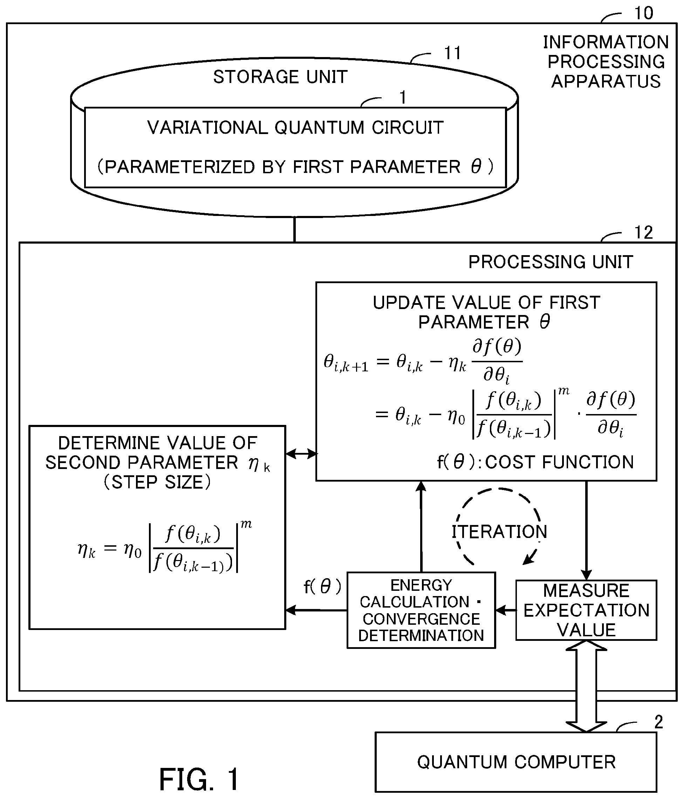

FIG. 1 illustrates an example of an information processing method according to the first embodiment. FIG. 1 illustrates an information processing apparatus 10 that executes the information processing method. The information processing apparatus 10 is able to implement the information processing method by executing, for example, an information processing program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores a variational quantum circuit 1 corresponding to a quantum many-body system to be solved by a variational quantum eigenvalue calculation. The variational quantum circuit 1 is parameterized by a first parameter $\theta$ that is a variable included in a cost function $f(\theta)$. The first parameter $\theta$ includes, for example, a set of a plurality of parameters $(\theta_1, \theta_2, ...)$.

The processing unit 12 performs variational quantum eigenvalue calculations. In a variational quantum eigenvalue calculation, the processing unit 12 uses, for example, a quantum computer 2 to measure the expectation value of a quantum state using the variational quantum circuit 1 to which the value of the first parameter $\theta$ has been applied. The processing unit 12 calculates the energy of the quantum many-body system based on the expectation value of the quantum state. The processing unit 12 determines whether the calculated energy satisfies a predetermined convergence condition. If the predetermined convergence condition is not satisfied, the processing unit 12 updates the value of the first parameter $\theta$ in a direction that decreases the energy. This process of updating the value of the first parameter $\theta$ is referred to as parameter optimization. The processing unit 12 performs the expectation value measurement using the quantum computer 2 and the parameter optimization a plurality of iterations until the energy satisfies the convergence condition.

The processing unit 12 may use a simulator, instead of the quantum computer 2, for measuring the expectation value of the quantum state using the variational quantum circuit 1 to which the value of the first parameter $\theta$ has been applied.

The value of $\theta_i$ included in the first parameter $\theta$ is updated according to, for example, Equation (1) in the (k+1)-th (k is a natural number) iteration of the update process of updating the first parameter $\theta$ using a gradient-based method.

$$\theta_{i,k+1} = \theta_{i,k} - \eta \frac{\partial f(\theta)}{\partial \theta_i} \qquad (1)$$

In Equation (1), $\theta_{i,k+1}$ represents $\theta_i$ obtained in the (k+1)-th iteration of the update process. $\theta_{i,k}$ represents $\theta_i$ obtained in the k-th iteration of the update process. $\eta$ is a second parameter representing a weight for an amount of change to be applied to the value of the first parameter $\theta$ in each iteration of the update process. It may also be said that $\eta$ is a parameter representing the degree to which the value of the first parameter $\theta$ is changed. Note that $\eta$ may be referred to as a step size or a learning rate of the gradient-based method. $f(\theta)$ is a cost function representing energy. $\partial f(\theta)/\partial \theta_i$ denotes a partial derivative representing the gradient of $f(\theta)$ with respect to a change in the value of the parameter $\theta_i$. More specifically, $\partial f(\theta)/\partial \theta_i$ represents the gradient of the parameter $\theta_i$ in the axial direction, and is a partial derivative of $f(\theta)$ with respect to the parameter $\theta_i$ at the point $(\theta)_{1,k}$, $\theta_{2,k}$, $\cdots$).

When $\eta$ is a fixed value, the following problem may occur. For example, if the value of $\eta$ is too large in the early stage of the optimization of the first parameter $\theta$, the value of the first parameter $\theta$ is changed excessively in a single iteration of the update process. In this case, there is a possibility that the optimization path deviates from an intended path and the optimization fails. On the other hand, if the value of $\eta$ is too small in the later stage of the optimization, the amount of change to be applied to the value of the first parameter $\theta$ may be underestimated. In this case, there is a possibility that the number of iterations of the update process until the convergence condition is satisfied increases. Therefore, there is a possibility that the time for the variational quantum eigenvalue calculation becomes long.

To address this, in the information processing method according to the first embodiment, the processing unit 12 uses a variable $\eta_k$, as described below, as the second parameter instead of the fixed value $\eta$. The second parameter $\eta_k$ is used in the (k+1)-th iteration of the update process of the first parameter $\theta$. The processing unit 12 determines the value of $\eta_k$ based on the ratio between $f(\theta_{i,k})$ and $f(\theta_{i,k-1})$

$f(\theta_{i,k})$ is the value of the cost function calculated by the variational quantum eigenvalue calculation using the value of $\theta_{i,k}$ obtained in the k-th iteration of the update process. $f(\theta_{i,k-1})$ is the value of the cost function calculated by the variational quantum eigenvalue calculation using the value of $\theta)_{i,k-1}$ obtained in the (k-1)-th iteration of the update process.

For example, $\eta_k$ is determined according to Equation (2).

$$\eta_k = \eta_0 \left| \frac{f(\theta_{i,k})}{f(\theta_{i,k-1})} \right|^m \qquad (2)$$

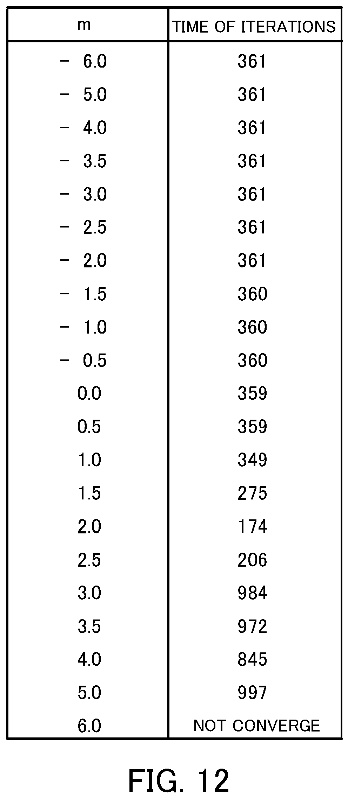

In Equation (2), $\eta_0$ is a predetermined reference value. In addition, the value of a third parameter m, which is the exponent in Equation (2), is set so as to reduce the number of iterations of the update process needed until the convergence condition is satisfied. A method of setting the value of the third parameter m will be described later (see FIG. 12).

The larger the ratio $f(\theta_{i,k})/f(\theta_{i,k-1})$ between $f(\theta_{i,k})$ and $f(\theta_{i,k-1})$, the larger the value of $\eta_k$. The smaller $f(\theta_{i,k})/f(\theta_{i,k-1})$ is, the smaller the value of $\eta_k$ is.

The processing unit 12 updates the value of the first parameter $\theta$ with the amount of change weighted by the value of the second parameter $\eta_k$ determined as described above, in the update process iteratively performed in the variational quantum eigenvalue calculation.

In the (k+1)-th iteration of the update process, the processing unit 12 updates $\theta$ according to Equation (3), for example.

$$\theta_{i,k+1} = \theta_{i,k} - \eta_k \frac{\partial f(\theta)}{\partial \theta_i} \qquad (3)$$

Unlike Equation (1), Equation (3) uses $\eta_k$ that is the second parameter determined using the ratio between $f(\theta_{i,k})$ and $f(\theta_{i,k-1})$. That is, the processing unit 12 sets a value obtained by subtracting the product of $\eta_k$ and $\partial f(\theta)/\partial \theta_i$ from the parameter $\theta_{i,k}$ obtained in the k-th iteration of the update process, as the updated value of the parameter $\theta_{i,k+1}$.

As described above, by determining the value of $\eta_k$ using the ratio between the current (k-th) $f(\theta_{i,k})$ and the previous ((k-1)-th) $f(\theta_{i,k-1})$, the change in the value of the cost function obtained during the variational quantum eigenvalue calculation is reflected in the value of $\eta_k$. In the early stage (when the value of k is small), where the optimization of the first parameter $\theta$ has not yet progressed, the magnitude relationship between $f(\theta_{i,k})$ and $f(\theta_{i,k-1})$ is undetermined, and the difference between the two values tends to be large. In the case where $f(\theta_{i,k})$ and $f(\theta_{i,k-1})$ exhibit such a tendency, the value of $\eta_k$ determined using the ratio of $f(\theta_{i,k})$ and $f(\theta_{i,k-1})$ also exhibits a tendency to increase or decrease greatly. Furthermore, the value of the first parameter $\theta$ whose amount of change is weighted by $\eta_k$ and the value (energy) of the cost function $f(\theta)$ also tend to increase or decrease with large changes. Such an operation corresponds to searching a wide region of the search space quickly, although roughly.

As a result, depending on the quantum many-body system being solved, the optimization may proceed along an optimization path toward lower energy quickly, compared to the case of using the second parameter $\eta$ with a fixed value, and the convergence of the energy may be accelerated. Accordingly, the number of iterations of the process for optimizing the first parameter $\theta$ is reduced, and thus it may be expected to reduce the calculation time.

As will be described in the following second embodiment, for example, in the case where the value of the first parameter $\theta$ is optimized so as to reduce the energy of a hydrogen molecule ($H_2$) or a benzene molecule ($C_6H_2$), the effect of reducing the calculation time is confirmed. The effect of reducing the calculation time at least for these molecules is sufficiently advantageous in the field of quantum chemical calculations.

[Second Embodiment]

A second embodiment is designed to accelerate the convergence of energy in a variational quantum eigenvalue calculation using a quantum computer, to reduce the variational quantum eigenvalue calculation time. In the second embodiment, the variational quantum eigenvalue is calculated using VQE. In the second embodiment, a process of updating the values of a parameter set $\theta$ including a plurality of parameters (the first parameter $\theta$ in the first embodiment) so as to reduce the energy of a quantum many-body system is referred to as an optimization process. In addition, a parameter (the second parameter $\eta_k$ in the first embodiment) representing a weight for an amount of change to be applied to the values of the parameter set $\theta$ including the plurality of parameters in each iteration of the optimization process is referred to as a step size $\eta_k$.

(Examples of System Configuration and Hardware)

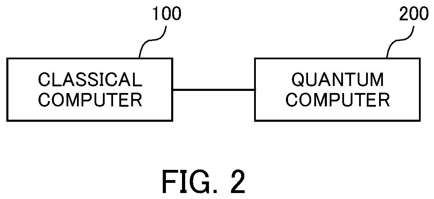

FIG. 2 illustrates an example of a system configuration according to the second embodiment. A classical computer 100 and a quantum computer 200 are connected via a network. The classical computer 100 is a von Neumann computer. The classical computer 100 performs parameter optimization calculation and others in VQE calculation. The quantum computer 200 is a quantum gate-based quantum computer that performs desired calculations by operating the states of qubits using a quantum circuit. In the VQE calculation, the quantum computer 200 obtains the expectation values of quantum states represented by a variational quantum circuit, using the variational quantum circuit based on specified parameter values.

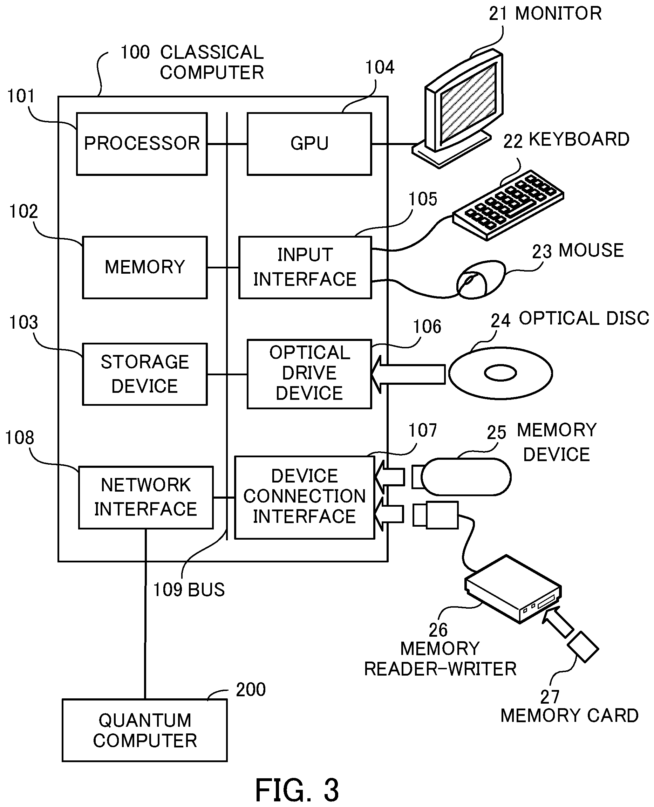

FIG. 3 illustrates an example of hardware of a classical computer. The entire classical computer 100 is controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of the functions implemented by the processor 101 executing a program may be implemented by an electronic circuit such as an application specific integrated circuit (ASIC) or a programmable logic device (PLD). The processor 101 may include a plurality of processor cores. The classical computer 100 may include a plurality of processors. Different processors may perform different processes among a plurality of processes performed by the classical computer 100. The processor may be referred to as processor circuitry. A set of a plurality of processors (multiprocessor) may be referred to as a "processor".

The memory 102 is used as a main storage device of the classical computer 100. The memory 102 temporarily stores at least part of an operating system (OS) program and application programs to be executed by the processor 101. The memory 102 also stores various data used for processing by the processor 101. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in storage medium. The storage device 103 is used as an auxiliary storage device of the classical computer 100. The storage device 103 stores the OS program, application programs, and various data. As the storage device 103, for example, a hard disk drive (HDD) or a solid state drive (SSD) may be used.

The GPU 104 is an arithmetic device that performs image processing, and may be referred to as a graphic controller. A monitor 21 is connected to the GPU 104. The GPU 104 displays images on the screen of the monitor 21 in accordance with instructions from the processor 101. The monitor 21 may be an organic electro luminescence (EL) display device, a liquid crystal display device, or another.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), CD-recordable (CD-R), CD-rewritable (RW), or another.

The device connection interface 107 is a communication interface for connecting peripheral devices to the classical computer 100. For example, a memory device 25 and a memory reader-writer 26 may be connected to the device connection interface 107. The memory device 25 is a storage medium having a function of communicating with the device connection interface 107. The memory reader-writer 26 is a device that writes data to a memory card 27 or reads data from the memory card 27. The memory card 27 is a card-type storage medium.

The network interface 108 is connected to the quantum computer 200 via the network. The network interface 108 transmits information such as a request for quantum computation to the quantum computer 200, and receives information indicating a computation result from the quantum computer 200. The network interface 108 is a wired communication interface connected to a wired communication device such as a switch or a router via a cable.

The classical computer 100 is able to implement the processing functions of the second embodiment with the hardware as described above. The apparatus described in the first embodiment may also be implemented with the same hardware as the classical computer 100 illustrated in FIG. 3.

The classical computer 100 implements the processing functions of the second embodiment by executing programs recorded on a computer-readable storage medium, for example. The programs describing the processing contents to be executed by the classical computer 100 may be recorded on various storage media. For example, a program to be executed by the classical computer 100 may be recorded on the storage device 103. The processor 101 loads at least part of the program from the storage device 103 into the memory 102 and executes the program. The program to be executed by the classical computer 100 may be recorded on a portable storage medium such as the optical disc 24, the memory device 25, or the memory card 27. The program recorded on the portable storage medium becomes executable after being installed in the storage device 103 under the control of the processor 101, for example. Alternatively, the processor 101 may read the program directly from the portable storage medium and execute the program.

In the above system, the classical computer 100 and the quantum computer 200 execute a VQE calculation in cooperation with each other.

(Example of Functional Blocks)

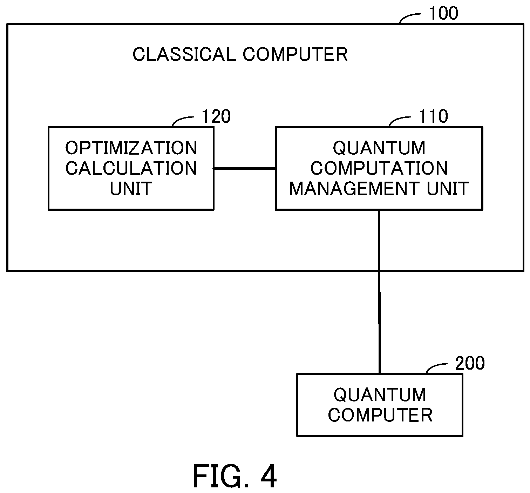

FIG. 4 is a block diagram illustrating an example of functions of the classical computer for VQE calculations. The classical computer 100 includes a quantum computation management unit 110 and an optimization calculation unit 120.

The quantum computation management unit 110 generates a variational quantum circuit for calculating the energy of a quantum many-body system such as a molecule, and instructs the quantum computer 200 to measure the expectation value of a quantum state based on the variational quantum circuit. For example, the quantum computation management unit 110 generates a variational quantum circuit for quantum chemical calculation and sets a parameter set $\theta$ related to the gate operations of quantum gates of the variational quantum circuit. Before the first energy calculation using the variational quantum circuit, the quantum computation management unit 110 sets the parameter set $\theta$ to initial values. The initial values for the parameters included in the parameter set $\theta$ are, for example, specified by a user in advance. Alternatively, random values may be used as the initial values of the parameters.

The quantum computation management unit 110 obtains the measurement result of the expectation value of the quantum state based on the variational quantum circuit parameterized by the parameter set $\theta$ from the quantum computer 200. The quantum computation management unit 110 calculates the energy based on the measurement result of the expectation value. Then, the quantum computation management unit 110 determines whether the energy has converged. If it is determined that the energy has not converged, the quantum computation management unit 110 instructs the optimization calculation unit 120 to optimize the parameter set $\theta$.

The optimization calculation unit 120 optimizes the parameter set $\theta$ in each iteration of the optimization process. For example, the optimization calculation unit 120 determines $\eta_k$ according to the above-described Equation (2). Then, the optimization calculation unit 120 updates the values in the parameter set $\theta$ according to the above-described Equation (3) using the determined $\eta_k$. When the optimization calculation is completed, the optimization calculation unit 120 notifies the quantum computation management unit 110 of the updated values of the parameter set $\theta$.

The function of each element illustrated in FIG. 4 may be implemented by causing a computer to execute a program module corresponding to the element, for example.

(Example of Variational Quantum Circuit)

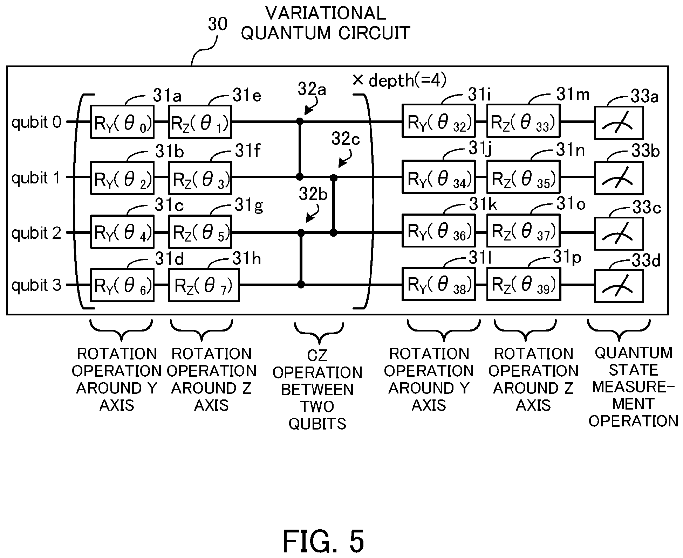

FIG. 5 illustrates an example of a variational quantum circuit. FIG. 5 illustrates, as an example, a variational quantum circuit 30 for measuring the expectation value of a quantum state for a hydrogen molecule. The variational quantum circuit 30 includes a plurality of quantum gates that perform gate operations on four qubits (qubits 0 to 3). Each horizontal line represents a qubit, and quantum gates that perform gate operations on the qubit are arranged on the horizontal line. During a quantum computation, the quantum computer 200 performs the gate operations on each qubit, in order from the left.

Single-qubit gates 31a to 31d are quantum gates that each perform a rotation operation around the y-axis of the Bloch sphere by a specified angle. By the single-qubit gates 31a to 31d, the rotation operation with a rotation angle $\theta_0$ is performed on the qubit 0, the rotation operation with a rotation angle $\theta_2$ is performed on the qubit 1, the rotation operation with a rotation angle $\theta_4$ is performed on the qubit 2, and the rotation operation with a rotation angle $\theta_6$ is performed on the qubit 3.

Single-qubit gates 31e to 31h are quantum gates that each perform a rotation operation around the z-axis of the Bloch sphere by a specified angle. By the single-qubit gates 31e to 31h, the rotation operation with a rotation angle $\theta_1$ is performed on the qubit 0, the rotation operation with a rotation angle $\theta_3$ is performed on the qubit 1, the rotation operation with a rotation angle $\theta_5$ is performed on the qubit 2, and the rotation operation with a rotation angle $\theta_7$ is performed on the qubit 3.

Two-qubit gates 32a to 32c are controlled-Z (CZ) gates that each perform an operation (CZ operation) of flipping the sign of a state when both a first bit (control bit) and a second bit (target bit) of two qubits are "1." The two-qubit gate 32a performs the CZ operation between the qubit 0 and the qubit1. The two-qubit gate 32b performs the CZ operation between the qubit 2 and the qubit 3. The two-qubit gate 32c performs the CZ operation between the qubit 1 and the qubit **2.**

The gate operations of the single-qubit gates 31a to 31h and the two-qubit gates 32a to 32c as described above are repeated four times (that is, a depth (circuit depth) of 4). In the second to fourth repetitions of the rotation operations, rotation angles $\theta_8$ to $\theta_{31}$ are used.

Thereafter, the gate operations of single-qubit gates 31i to 31p are performed. The single-qubit gates 31i to 31l are quantum gates that each perform a rotation operation around the y-axis of the Bloch sphere by a specified angle. By the single-qubit gates 31i to 31l, the rotation operation with a rotation angle $\theta_{32}$ is performed on the qubit 0, the rotation operation with a rotation angle $\theta_{34}$ is performed on the qubit 1, the rotation operation with a rotation angle $\theta_{36}$ is performed on the qubit 2, and the rotation operation with a rotation angle $\theta_{38}$ is performed on the qubit 3. The single-qubit gates 31m to 31p are quantum gates that each perform a rotation operation around the z-axis of the Bloch sphere by a specified angle. By the single-qubit gates 31m to 31p, the rotation operation with a rotation angle $\theta_{33}$ is performed on the qubit 0, the rotation operation with a rotation angle $\theta_{35}$ is performed on the qubit 1, the rotation operation with a rotation angle $\theta_{37}$ is performed on the qubit 2, and the rotation operation with a rotation angle $\theta_{39}$ is performed on the qubit 3.

The quantum state of each qubit is then measured. These quantum state measurement operations are indicated by symbols 33a to 33d at the rightmost ends of the lines corresponding to the respective qubits.

For example, the variational quantum circuit 30 as described above is used in a VQE calculation to obtain the ground-state energy of a hydrogen molecule.

(Example Procedure for VQE Calculation Process)

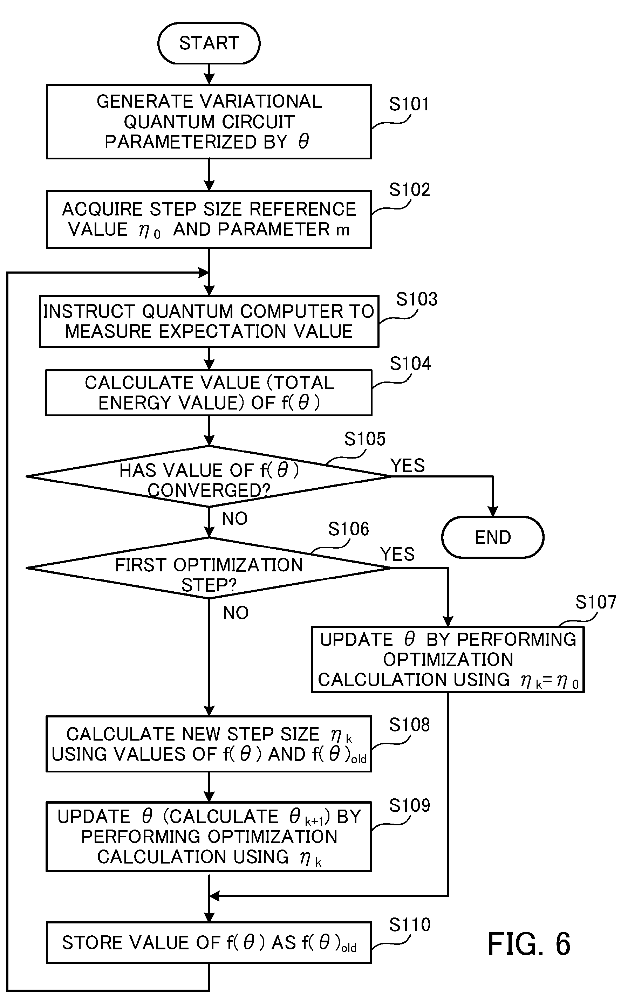

FIG. 6 is a flowchart illustrating an example procedure for a VQE calculation process. Hereinafter, the process illustrated in FIG. 6 will be described in order of step numbers.

[Step S101] The quantum computation management unit 110 generates a variational quantum circuit parameterized by a parameter set $\theta$ including a plurality of parameters. The quantum computation management unit 110 uses, for example, values specified in advance as the initial values for the parameter set $\theta$ including the plurality of parameters.

[Step S102] The quantum computation management unit 110 acquires a reference value $\eta_0$, which is the initial value of a step size $\eta_s$ used in parameter optimization. In addition, the quantum computation management unit 110 acquires the value of a third parameter m (hereinafter, simply referred to as a parameter m), which is the exponent in Equation (2). For example, the quantum computation management unit 110 receives user input specifying the reference value $\eta_0$ and the value of the parameter m. The quantum computation management unit 110 transmits the acquired reference value $\eta_0$ and the acquired value of the parameter m to the optimization calculation unit 120. The optimization calculation unit 120 stores the reference value $\eta_0$ and the value of the parameter m.

[Step S103] The quantum computation management unit 110 instructs the quantum computer 200 to measure the expectation value. For example, the quantum computation management unit 110 transmits the generated variational quantum circuit and the values of the parameter set $\theta$ including the plurality of parameters to the quantum computer 200, and instructs the quantum computer 200 to calculate the expectation value of the quantum state (the value of each qubit) based on the variational quantum circuit. The quantum computer 200 measures the expectation value of the quantum state using the variational quantum circuit parameterized by the parameter set $\theta$ including the plurality of parameters.

[Step S104] The quantum computation management unit 110 calculates the value of the cost function $f(\theta)$ (corresponding to the total energy value) from the expectation value of the quantum state.

[Step S105] The quantum computation management unit 110 determines whether the value of the cost function $f(\theta)$ has converged. If the value of the cost function $f(\theta)$ satisfies a predetermined convergence condition, the quantum computation management unit 110 determines that the value of the cost function $f(\theta)$ has converged. For example, the quantum computation management unit 110 determines that the value of the cost function $f(\theta)$ has converged if the value of the cost function $f(\theta)$ has reached a known value as the value of the ground-state energy. Alternatively, the quantum computation management unit 110 may determine that the value of the cost function $f(\theta)$) has converged if the difference between the value of the cost function $f(\theta)$ calculated this time and the value ($f(\theta)_{old}$) of the cost function $f(\theta)$ calculated last time is less than or equal to a predetermined threshold.

If the quantum computation management unit 110 determines that the value of the cost function $f(\theta)$ has converged, the quantum computation management unit 110 outputs the solution corresponding to the quantum state at that time, and completes the VQE calculation process. If the quantum computation management unit 110 determines that the value of the cost function $f(\theta)$ has not converged, the process proceeds to step S106.

[Step S106] The quantum computation management unit 110 determines whether the current optimization process is the first iteration (first optimization step). If the quantum computation management unit 110 determines that it is the first optimization step, the process proceeds to step S107. If the quantum computation management unit 110 determines that it is not the first optimization step, the process proceeds to step S108.

[Step S107] The optimization calculation unit 120 updates the values of the parameter set $\theta$ including the plurality of parameters by performing the calculation (optimization calculation) given by Equation (3) using the reference value $\eta_0$ as the step size $\eta_k$. Thereafter, the process proceeds to step S110.

[Step S108] The optimization calculation unit 120 uses the value of the cost function $f(\theta)$ and $f(\theta)_{old}$ to calculate a new value for the step size $\eta_k$ according to Equation (2). The value of the cost function $f(\theta)$ corresponds to $f(\theta_{i,k})$ in Equation (2), and $f(\theta)_{old}$ corresponds to $f(\theta_{i,k-1})$ in Equation (2).

[Step S109] The optimization calculation unit 120 updates the values of the parameter set $\theta$ including the plurality of parameters by performing the calculation (optimization calculation) given by Equation (3) using the step size $\eta_k$ calculated in step S108. Thereafter, the process proceeds to step S110.

[Step S110] The quantum computation management unit 110 stores the value of $f(\theta)$ as $f(\theta)_{old}$ in the memory 102. Thereafter, the optimization calculation unit 120 advances the process to step S103.

By performing the above VQE calculation process, the classical computer 100 reflects a change in the value of $f(\theta)$ obtained during the VQE calculation on the value of the step size $\eta_k$. In the early stage where the optimization has not yet progressed, the magnitude relationship between $f(\theta)$ and $f(\theta)_{old}$ is undetermined, and the difference between these values tends to be large. In the case where $f(\theta)$ and $f(\theta)_{old}$ exhibit such a tendency, the value of the step size $\eta_k$ that is determined by using the ratio of $f(\theta)$ and $f(\theta)_{old}$ also tends to increase or decrease greatly. Furthermore, the values of the parameter set $\theta$ including the plurality of parameters, whose amount of change is weighted by the step size $\eta_k$, and the value (energy) of $f(\theta)$ also tend to increase or decrease with large changes.

Thus, depending on the quantum many-body system being solved, optimization may proceed along an optimization path toward lower energy quickly, compared to the case of using the step size $\eta$ with a fixed value, and the convergence of the energy may be accelerated. As a result, the number of iterations of the process for optimizing the parameter set $\theta$ including the plurality of parameters is reduced, and thus it may be expected to reduce the calculation time.

The procedure for the VQE calculation process illustrated in FIG. 6 is an example, and the order of steps may be changed as appropriate.

(Application Examples of VQE Calculation)

The following describes examples in which VQE calculations for obtaining the energy of a hydrogen molecule and the energy of a benzene molecule were performed according to the procedure illustrated in FIG. 6.

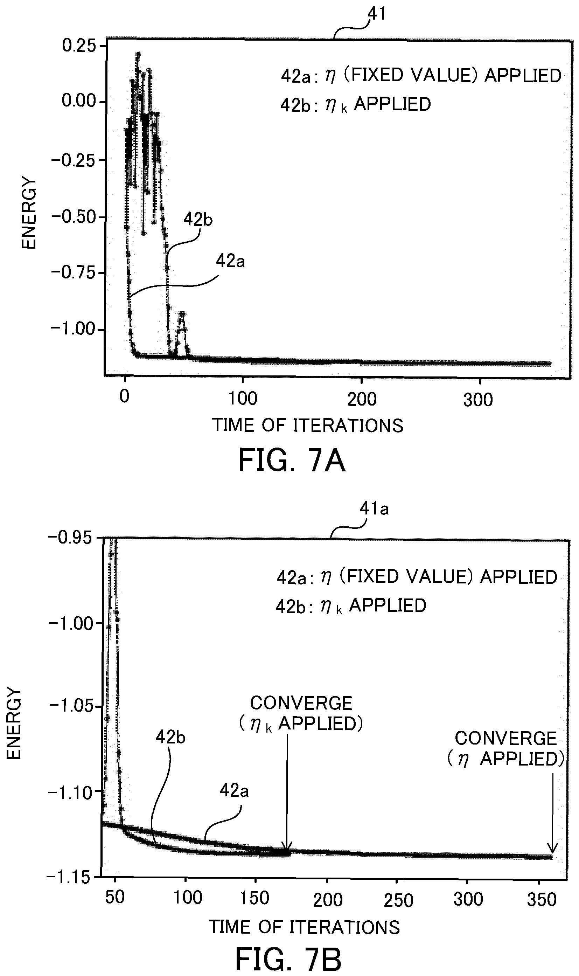

FIGS. 7A and 7B illustrate examples of VQE calculations for obtaining the energy of a hydrogen molecule. In FIG. 7A, a graph 41 represents the results of calculating the energy of the hydrogen molecule using VQE when the interatomic distance is 0.74 Å. FIG. 7B represents a graph 41a in which the graph 41 is enlarged in the energy range of -1.15 to -0.95. In the graphs 41 and 41a, the horizontal axis represents the number of iterations of the optimization process, and the vertical axis represents energy. The VQE calculations for the energy of the hydrogen molecule were performed using the variational quantum circuit 30, which is designed to measure the expectation value of the quantum state of the hydrogen molecule as illustrated in FIG. 5.

A polygonal line 42a represents changes in energy when the step size $\eta$ with a fixed value is applied. A polygonal line 42b represents changes in energy when the step size $\eta_k$, which varies according to Equation (2), is applied. In the calculation examples of FIGS. 7A and 7B, the value of the parameter m in Equation (2) is set to 2.0. The fixed value of the

step size $\eta$ and the initial value of the step size $\eta_k$ are both set to the reference value $\eta_0$.

As represented by the polygonal line 42a, when the step size $\eta$ with the fixed value is used, the energy first decreases greatly and then continues to decrease gradually. On the other hand, as represented by the polygonal line 42b, when the step size $\eta_k$ is applied, the energy repeatedly increases and decreases with large changes when the number of iterations is small (for example, 50 iterations or less).

However, the convergence condition is satisfied early to thereby complete the calculation in the case where the step size $\eta_k$ is applied, compared to the case where the step size $\eta$ with the fixed value is applied. In the example of FIGS. 7A and 7B, the number of iterations until the convergence condition is satisfied when the step size $\eta$ is applied is 359, whereas the number of iterations until the convergence condition is satisfied when the step size $\eta_k$ is applied is 174. That is, the case of applying the step size $\eta_k$ achieves an approximately 52% reduction in the calculation time with respect to the case of applying the step size $\eta$.

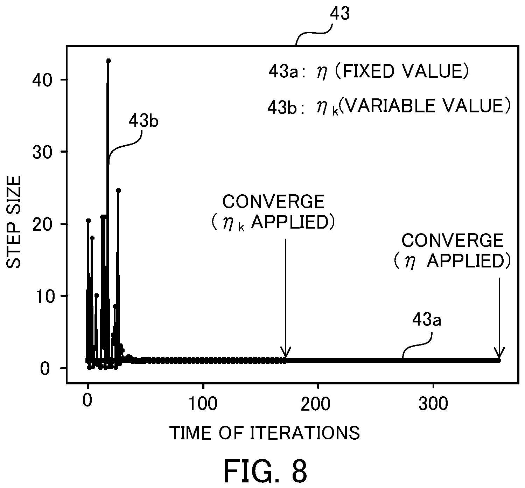

FIG. 8 illustrates an example of how a step size changes during a VQE calculation for obtaining the energy of the hydrogen molecule. In the graph 43 illustrated in FIG. 8, the horizontal axis represents the number of iterations of the optimization process, and the vertical axis represents the value of the step size. A straight line 43a represents the step size $\eta$ (= $\eta_0$) with a fixed value. A polygonal line 43b represents changes in the variable step size $\eta_k$.

As represented by the polygonal line 43b, in an early stage (when the number of iterations is small) in which the optimization has not yet progressed, the step size $\eta_k$ repeatedly increases and decreases with large changes. As the optimization proceeds, the value of the step size $\eta_k$ becomes substantially equal to the fixed value of the step size $\eta$.

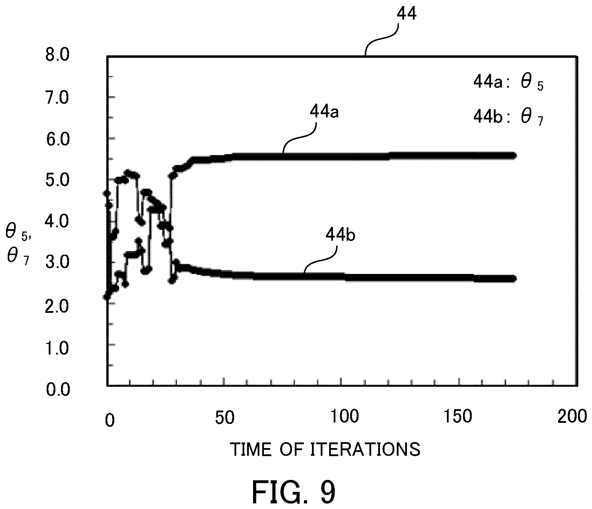

FIG. 9 illustrates an example of optimizing a parameter set $\theta$ during a VQE calculation for obtaining the energy of the hydrogen molecule. In the graph 44 illustrated in FIG. 9, the horizontal axis represents the number of iterations of the optimization process, and the vertical axis represents the values of $\theta_5$ and $\theta_7$ in the parameter set $\theta$. A polygonal line 44a represents changes in $\theta_5$, and a polygonal line 44b represents changes in $\theta_7$.

When the number of iterations is small, the values of $\theta_5$ and $\theta_7$ greatly increase and decrease as represented by the polygonal lines 44a and 44b, due to the changes in the value of the step size $\eta_k$ illustrated in FIG. 8. When the optimization proceeds and the changes in the value of the step size $\eta_k$ decrease, the changes in the values of $\theta_5$ and $\theta_7$ also decrease and become substantially constant values, as represented by the polygonal lines 44a and 44b. Although not illustrated, the other parameters $\theta_i$ in the parameter set $\theta$ also exhibit similar change tendencies.

As described above, in the early stage of the optimization, the parameter set $\theta$ is optimized so that the parameter values change greatly. Thus, as illustrated in FIGS. 7A and 7B, the energy also repeatedly increases and decreases with large changes. As a result, compared to the case of using the step size $\eta$ with the fixed value, the optimization proceeds along an optimization path toward lower energy quickly, and the convergence of the energy is accelerated.

The following describes examples of VQE calculations for obtaining the energy of a benzene molecule. The VQE calculations for the energy of the benzene molecule were performed using a variational quantum circuit (not illustrated) that is designed to measure the expectation value of the quantum state of the benzene molecule.

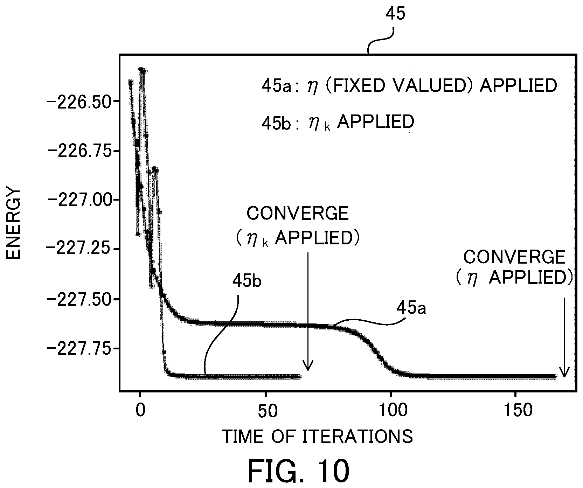

FIG. 10 illustrates examples of VQE calculations for obtaining the energy of a benzene molecule. In FIG. 10, a graph 45 represents the results of calculating the energy of the benzene molecule using VQE. The distance between carbon atoms of the benzene molecule is 1.39 Å, and the distance between a carbon atom and a hydrogen atom is 1.07 Å. The horizontal axis of the graph 45 represents the number of iterations of the optimization process, and the vertical axis represents energy.

A polygonal line 45a represents changes in energy when the step size $\eta$ with a fixed value is applied. A polygonal line 45b represents changes in energy when the step size $\eta_k$, which varies according to Equation (2), is applied. In the calculation examples of FIG. 10, the value of the parameter m in Equation (2) is set to 2.0. The fixed value of the step size $\eta$ and the initial value of the step size $\eta_k$ are both set to the reference value $\eta_0$.

As represented by the polygonal line 45a, when the step size $\eta$ with the fixed value is used, the energy first decreases greatly, and after a period in which the energy remains nearly constant, the energy further decreases greatly and converges. During the period in which the energy remains nearly constant, the energy is trapped in a valley (a local minimum) of the energy potential, which is larger than the global minimum.

On the other hand, when the step size $\eta_k$ is applied, as represented by the polygonal line 45b, the energy repeatedly increases and decreases with large changes in the early stage, and then decreases greatly and converges. In the example of FIG. 10, the number of iterations until the convergence condition is satisfied when the step size $\eta$ is applied is 170, whereas the number of iterations until the convergence condition is satisfied when the step size $\eta_k$ is applied is 68. That is, the case of applying the step size $\eta_k$ achieves a 60% reduction in the calculation time with respect to the case of applying the step size $\eta$.

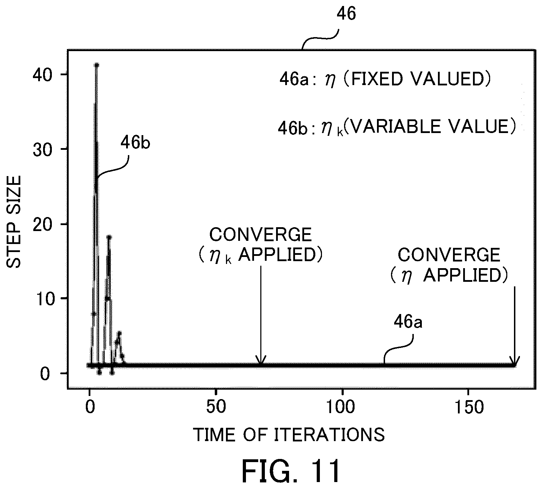

FIG. 11 illustrates an example of how a step size changes during a VQE calculation for obtaining the energy of the benzene molecule. In the graph 46 illustrated in FIG. 11, the horizontal axis represents the number of iterations of the optimization process, and the vertical axis represents the value of the step size. A straight line 46a represents the step size $\eta$ with a fixed value. A polygonal line 46b represents changes in the variable step size $\eta_s$.

As represented by the polygonal line 46b, in the early stage (when the number of iterations is small) in which the optimization has not yet progressed, the step size $\eta_k$ repeatedly increases and decreases with large changes. As the optimization proceeds, the value of the step size $\eta_k$ becomes substantially equal to the fixed value of the step size $\eta$.

Although not illustrated, the values in the parameter set $\theta$ are optimized so that the parameter values change greatly due to the magnitude of the changes in the step size $\eta_k$ when the number of iterations is small. Due to the changes in the values of the parameter set $\theta$, the energy also repeatedly increases and decreases with large changes as illustrated in FIG. 10. As a result, the energy is able to exit the valley (local minimum) of the energy potential early, compared to the case of using the step size $\eta$ with the fixed value. Therefore, the optimization proceeds along an optimization path toward lower energy quickly, and the convergence of the energy is accelerated.

(Setting Example of Value of Parameter m)

The value of the parameter m is set in consideration of, for example, the following points so as to reduce the number of iterations of the optimization process until the convergence condition is satisfied.

In Equation (2), when $|f(\theta_{i,k})/f(\theta_{i,k-1})| > 1$ and $m > 0$ or when $|f(\theta_{i,k})/f(\theta_{i,k-1})| < 1$ and $m < 0$, the value of $|f(\theta_{i,k})/f(\theta_{i,k-1})|^m$ increases as the absolute value of the parameter m increases. When the absolute value of the parameter m becomes exceedingly large, the value of $|f(\theta_{i,k})/f(\theta_{i,k-1})|^m$ also becomes exceedingly large. As a result, the value of the step size $\eta_k$ also becomes exceedingly large, the values in the parameter set $\theta$ change too much, and there is a possibility that the energy does not converge (the calculation fails).

On the other hand, in Equation (2), when $|f(\theta_{i,k})/f(\theta_{i,k-1})| > 1$ and $m < 0$ or when $|f(\theta_{i,k})/f(\theta_{i,k-1})| < 1$ and $m > 0$, the value of $|f(\theta_{i,k})/f(\theta_{i,k-1})|^m$ decreases as the absolute value of the parameter m increases. When the absolute value of the parameter m becomes exceedingly large, the value of $|f(\theta_{i,k})/f(\theta_{i,k-1})|^m$ becomes exceedingly small. As a result, the value of the step size $\eta_k$ also becomes exceedingly small, and there is a possibility that the values in the parameter set $\theta$ change little.

In view of the above, the inventors of the present application have found that it is preferable to set the value of the parameter m such that the absolute value of the parameter m is a real number greater than 0 and less than or equal to 5.0.

FIG. 12 illustrates an experimental result of the relationship between the value of the parameter m and the number of iterations until a convergence condition is satisfied. FIG. 12 illustrates the number of iterations obtained when the VQE calculation for obtaining the energy of the hydrogen molecule was performed with the step size $\eta_k$, while changing the value of the parameter m.

As illustrated in FIG. 12, in cases where the value of the parameter m is negative and greater than or equal to -6.0, the number of iterations remains substantially unchanged. In cases where the value of the parameter m is positive, the minimum number of iterations (= 174 iterations) is obtained at m = 2.0. However, the convergence condition was not satisfied at m = 6.0.

From the above, it is found that $0 < |m| \leq$ approximately 5.0 is preferable. Further, since the minimum number of iterations is obtained when the value of the parameter m is 2.0, as described above, the parameter m is set to 2.0 in the calculations illustrated in FIGS. 7A and 7B.

Although not illustrated, in the VQE calculations for obtaining the energy of the benzene molecule, the minimum number of iterations is also obtained when the value of the parameter m is 2.0.

As described above, by using the dynamically changing step size $\eta_k$ in each optimization step for the parameter set $\theta$ in the VQE calculation, the convergence of the energy is accelerated, and the number of iterations of the optimization is reduced. As a result, the calculation time needed for the optimization is also reduced. The number of iterations until energy convergence is reduced by approximately 52% for the hydrogen molecule and by approximately 60% for the benzene molecule, and the calculation times for the optimization are also reduced by similar extents.

The above reductions in calculation time at least for these molecules are sufficiently beneficial in the field of quantum chemical calculations.

The foregoing merely illustrates the principles of the invention. Further, many modifications and variations are possible for those skilled in the art, and the present invention is not limited to the exact construction and application examples shown and described above, and all corresponding modifications and equivalents are deemed to be within the scope of the present invention as defined by the appended claims and their equivalents.

According to an aspect, the calculation time of a variational quantum eigenvalue calculation is reduced.

**Claims**

1. A computer program that causes a computer to perform, a plurality of iterations, an update process of updating a value of a first parameter that is a variable included in a cost function, the value of the first parameter being applied to a variational quantum circuit (1) used for a variational quantum eigenvalue calculation, the computer program causing the computer to perform a process comprising:

determining a value of a second parameter representing a weight for an amount of change to be applied to the value of the first parameter in each iteration of the update process, by using a ratio between a first value of the cost function and a second value of the cost function, the first value being calculated by the variational quantum eigenvalue calculation using the value of the first parameter obtained in a k-th iteration of the update process, the second value being calculated by the variational quantum eigenvalue calculation using the value of the first parameter obtained in a (k-1)-th iteration of the update process, the k being a natural number; and

performing a (k+1)-th iteration of the update process using the amount of change weighted by the determined value of the second parameter.

2. The computer program according to claim 1, wherein the determining of the value of the second parameter includes raising an absolute value of the ratio to a power of a value of a third parameter, and setting a product of a result of the raising and a reference value of the second parameter as the value of the second parameter.

3. The computer program according to claim 1, wherein the (k+1)-th iteration of the update process updates the value of the first parameter to a value obtained by subtracting a product of the value of the second parameter determined by the determining of the value of the second parameter and a partial derivative representing a gradient of the cost function with respect to a change in the value of the first parameter from the value of the first parameter obtained in the k-th iteration of the update process.

4. The computer program according to claim 2, wherein the absolute value of the third parameter is a real number greater than 0 and less than or equal to 5.

5. The computer program according to claim 2, wherein the value of the third parameter is set to 2.0 in measuring an expectation value of a quantum state of a hydrogen molecule or a benzene molecule using the variational quantum circuit.

6. An information processing method executed by a computer to perform, a plurality of iterations, an update process of updating a value of a first parameter that is a variable included in a cost function, the value of the first parameter being applied to a variational quantum circuit (1) used for a variational quantum eigenvalue calculation, the information processing method comprising:

determining a value of a second parameter representing a weight for an amount of change to be applied to the value of the first parameter in each iteration of the update process, by using a ratio between a first value of the cost function and a second value of the cost function, the first value being calculated by the variational quantum eigenvalue calculation using the value of the first parameter obtained in a k-th iteration of the update process, the second value being calculated by the variational quantum eigenvalue calculation using the value of the first parameter obtained in a (k-1)-th iteration of the update process, the k being a natural number; and

performing a (k+1)-th iteration of the update process using the amount of change weighted by the determined value of the second parameter.

7. An information processing apparatus for performing, a plurality of iterations, an update process of updating a value of a first parameter that is a variable included in a cost function, the value of the first parameter being applied to a variational quantum circuit (1) used for a variational quantum eigenvalue calculation, the information processing apparatus comprising:

processing means (12) for

determining a value of a second parameter representing a weight for an amount of change to be applied to the value of the first parameter in each iteration of the update process, by using a ratio between a first value of the cost function and a second value of the cost function, the first value being calculated by the variational quantum eigenvalue calculation using the value of the first parameter obtained in a k-th iteration of the update process, the second value being calculated by the variational quantum eigenvalue calculation using the value of the first parameter obtained in a (k-1)-th iteration of the update process, the k being a natural number, and

performing a (k+1)-th iteration of the update process using the amount of change weighted by the determined value of the second parameter.

FIG. 1

100

200

| CLASSICAL COMPUTER | QUANTUM COMPUTER |

FIG. 2

21 MONITOR

100 CLASSICAL COMPUTER

104

101

PROCESSOR

GPU

22 KEYBOARD

105

102

MEMORY

INPUT INTERFACE

23 MOUSE

106

24 OPTICAL DISC

103

STORAGE DEVICE

OPTICAL DRIVE DEVICE

107

25 MEMORY DEVICE

108

NETWORK INTERFACE

DEVICE CONNECTION INTERFACE

109 BUS

26 MEMORY READER-WRITER

27 MEMORY CARD

200

QUANTUM COMPUTER

FIG. 3

FIG. 4

VARIATIONAL
QUANTUM CIRCUIT

FIG. 5

START

GENERATE VARIATIONAL
QUANTUM CIRCUIT
PARAMETERIZED BY $\theta$ —— S101

ACQUIRE STEP SIZE REFERENCE
VALUE $\eta_0$ AND PARAMETER m —— S102

INSTRUCT QUANTUM COMPUTER TO
MEASURE EXPECTATION VALUE —— S103

CALCULATE VALUE (TOTAL
ENERGY VALUE) OF f($\theta$) —— S104

HAS VALUE OF f($\theta$)
CONVERGED? —— S105   YES

NO

FIRST OPTIMIZATION
STEP? —— S106   YES

NO

END

UPDATE $\theta$ BY PERFORMING
OPTIMIZATION
CALCULATION USING $\eta_k = \eta_0$ —— S107

CALCULATE NEW STEP SIZE $\eta_k$
USING VALUES OF f($\theta$) AND f($\theta$)$_{old}$ —— S108

UPDATE $\theta$ (CALCULATE $\theta_{k+1}$) BY
PERFORMING OPTIMIZATION
CALCULATION USING $\eta_k$ —— S109

STORE VALUE OF f($\theta$) AS f($\theta$)$_{old}$ —— S110

FIG. 6

FIG. 7A

FIG. 7B

FIG. 8

FIG. 9

FIG. 10

FIG. 11

| m | TIME OF ITERATIONS |
|:---:|:---:|
| − 6.0 | 361 |
| − 5.0 | 361 |
| − 4.0 | 361 |
| − 3.5 | 361 |
| − 3.0 | 361 |
| − 2.5 | 361 |
| − 2.0 | 361 |
| − 1.5 | 360 |
| − 1.0 | 360 |
| − 0.5 | 360 |
| 0.0 | 359 |
| 0.5 | 359 |
| 1.0 | 349 |
| 1.5 | 275 |
| 2.0 | 174 |
| 2.5 | 206 |
| 3.0 | 984 |
| 3.5 | 972 |
| 4.0 | 845 |
| 5.0 | 997 |
| 6.0 | NOT CONVERGE |

## FIG. 12

Europäisches
Patentamt
European
Patent Office
Office européen
des brevets

## EUROPEAN SEARCH REPORT

**Application Number**

EP 25 18 7653

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JULES TILLY ET AL: "The Variational Quantum Eigensolver: a review of methods and best practices", ARXIV.ORG, CORNELL UNIVERSITY LIBRARY, 201 OLIN LIBRARY CORNELL UNIVERSITY ITHACA, NY 14853, 25 August 2022 (2022-08-25), XP091301997, * abstract * * chapters 1-2; page 1 - page 26; figures 1,2 * * chapter 7; page 88 - page 104; figure 13 * ----- | 1-7 | INV. G06N5/01 G06N10/20 G06N10/60 G06N20/00 |
| A | WANG FENGCHUN ET AL: "A Variable Step-Size LMS Adaptive Filtering Algorithm Based on Error Feedback", PROCEEDINGS OF THE 2013 THE INTERNATIONAL CONFERENCE ON EDUCATION TECHNOLOGY AND INFORMATION SYSTEMS, 31 May 2013 (2013-05-31), XP093332423, DOI: 10.2991/icetis-13.2013.185 ISBN: 978-90-78677-76-5 * the whole document * ----- | 1-4,6,7 | |
| A | KR 102 610 185 B1 (HANA TI CO., LTD.) 4 December 2023 (2023-12-04) * the whole document * ----- | 1-4,6,7 | TECHNICAL FIELDS SEARCHED (IPC) G06N |

The present search report has been drawn up for all claims

| Place of search | Date of completion of the search | Examiner |
|---|---|---|
| The Hague | 14 November 2025 | Hasnas, Sergiu |

EPO FORM 1503 03.82 (P04C01)

## ANNEX TO THE EUROPEAN SEARCH REPORT
## ON EUROPEAN PATENT APPLICATION NO.

EP 25 18 7653

This annex lists the patent family members relating to the patent documents cited in  the above-mentioned European search report.
The members are as contained in the European Patent Office EDP file on
The European Patent Office is in no way liable for these particulars which are merely given for the purpose of information.

14-11-2025

| Patent document cited in search report | Publication date | Patent family member(s) | Publication date |
|---|---|---|---|
| KR 102610185      B1 | 04-12-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023113956 A
- JP 2022529187 A
- US 20230289639
- US 20230141618